(19) Europäisches Patentamt

European Patent Office

Office européen des brevets

(11) **EP 3 965 198 B1**

(12) **EUROPEAN PATENT SPECIFICATION**

(45) Date of publication and mention
of the grant of the patent:
**28.01.2026 Bulletin 2026/05**

(21) Application number: **20184395.0**

(22) Date of filing: **07.07.2020**

(51) International Patent Classification (IPC):
*H01M 50/20* (2021.01)   *H01M 10/052* (2010.01)
*H01M 10/44* (2006.01)   *H01M 10/48* (2006.01)
*H01M 10/615* (2014.01)   *H01M 10/6556* (2014.01)
*H02J 7/00* (2026.01)   *H01M 10/625* (2014.01)

(52) Cooperative Patent Classification (CPC):
**H01M 10/052; H01M 10/441; H01M 10/443;
H01M 10/482; H01M 10/615; H01M 10/625;
H01M 10/6556; H01M 50/20; H02J 7/007182;
H02J 7/007194;** H01M 10/486; H02J 7/00036;
Y02E 60/10

(54) **ONLINE MEASUREMENT OF ANODE POTENTIAL FOR THE MAXIMIZATION OF CHARGING POWER AT LOW TEMPERATURES**

ONLINE-MESSUNG DES ANODENPOTENZIALS ZUR MAXIMIERUNG DER LADELEISTUNG BEI NIEDRIGEN TEMPERATUREN

MESURE EN LIGNE DE POTENTIEL D'ANODE POUR MAXIMISER LA PUISSANCE DE CHARGEMENT À BASSES TEMPÉRATURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.03.2022 Bulletin 2022/10**

(73) Proprietor: **Samsung SDI Co., Ltd.
Gyeonggi-do 17084 (KR)**

(72) Inventor: **JANEK, Alex
8041 Graz (AT)**

(74) Representative: **Gulde & Partner
Patent- und Rechtsanwaltskanzlei mbB
Berliner Freiheit 2
10785 Berlin (DE)**

(56) References cited:
WO-A2-2013/006415   JP-A- 2012 049 040
US-A1- 2006 132 101   US-A1- 2019 280 345

## Description

## Field of the Invention

The present invention relates to a battery system that allows for an optimized charging process, and in particular for a charging process, wherein the charging power is maximized when the battery system is in a low temperature environment. The invention is further related to a battery pack comprising one or more battery systems according to the invention and to a vehicle comprising at least one battery systems according to the invention and/or at least one battery pack according to the invention. Also, the present invention relates to a method for charging a battery system, wherein the charging power is maximized when the battery system is in a low temperature environment.

## Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g. cylindrical or prismatic, depends on the battery's intended purpose. Lithium-ion (and similar lithium polymer) batteries, widely known via their use in laptops and consumer electronics, dominate the most recent group of electric vehicles in development.

Rechargeable batteries may be used as a battery system or a battery module (the latter terms may be used interchangeably) formed of a plurality of unit battery cells coupled in series and/or in parallel so as to provide a high energy density, in particular for motor driving of a hybrid or fully electric vehicle. That is, the battery system is formed by interconnecting the electrode terminals of the plurality of unit battery cells depending on a required amount of power and in order to realize a high-power rechargeable battery.

A battery pack is a set of any number of (preferably identical) battery systems or battery modules. They may be configured in a series, parallel or a mixture of both to deliver the desired voltage, capacity, or power density. Components of battery packs include the individual battery systems/modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e.g. a SPI or CAN interface. The BMS/BMU may further communicate with each of the battery submodules, particularly with a cell supervision circuit (CSC) of each battery submodule. The CSC may be further connected to a cell connection and sensing unit (CCU) of a battery submodule that interconnects the battery cells of the battery submodule.

Thus, the BMS/BMU is provided for managing the battery system or battery pack, such as by protecting the battery system/pack from operating outside its safe operating area, monitoring its state, calculating secondary data, reporting that data, controlling its environment, authenticating it and/or balancing it.

To provide thermal control of the battery system or battery pack, an active or passive thermal management system is required to safely use the at least one battery system by efficiently emitting, discharging and/or dissipating heat generated from its rechargeable batteries. If the heat emission/discharge/dissipation is not sufficiently performed, temperature deviations occur between respective battery cells, such that the at least one battery system cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Fast charging requirements, and in particular the fast charging requirements of for batteries for electric vehicles (EVB, see above) require an efficient use of charging capabilities of nowadays cells. Battery cells employed in an EVB are usually high energy density cells, which support strong discharge power but are weak in charging power. Charging power is mostly limited by the risk of lithium plating, which strongly reduces life-time of the cell and may even lead to a risk of safety critical events.

The term 'lithium plating' relates to an electrochemical effect, which may occur during a charging process of a lithium-ion battery cell: metallic lithium forms inside the battery cell and becomes deposited on the anode of the battery cell. Then, deposited metallic lithium is no longer available for the charging process. As a typical result, the cell's life-time becomes reduced. Also, metallic lithium is quickly flammable. Furthermore, lithium plating may lead to the formation of dendrites. In the worst case, the dendrites penetrate the battery cell's separator and short-circuit the cell. Lithium plating occurs mostly at cold temperatures, e. g., at temperatures of 10°C or lower of a battery cell being charged.

In order to avoid the occurrence of lithium plating during battery charging, huge tables are employed in state-of-the-art batteries, wherein the tables define charging current limits (corresponding to charging voltage limits) depending on state of charge or voltage level and temperature of a battery. The supervision if these quantities is required to ensure, with the help of the charging current limits defined in the table, the operation of the cell in a range, which is not causing lithium plating. However, a massive testing effort is needed to determine the values to be filled into these tables. Further, as the anode potential of the cells cannot be measured directly, conservative limits have to be used, which impedes an efficient use of the cell's charging capabilities.

US 2019/280345 A1 discloses methods for fast-charging battery packs having at least one lithium battery cell with an anode, a cathode, and a reference electrode (RE) comprise charging the battery in a first phase by maximizing charging current, subsequently charging the battery in a second phase by decreasing the charging current in response to an anode potential (AP) determined by a RE to maintain the AP at or above an AP threshold, and subsequently charging the battery in a third phase by decreasing the charging current in response to the cathode potential (CP) determined by the RE such that the CP is maximized without exceeding the cathode potential threshold. A controller can determine anode potential or cathode potential in real time using a cell potential signal and a cathode RE signal or an anode RE signal, respectively. The AP threshold is the AP above which substantially no lithium plating occurs.

WO 2013/006415 A2 deals with a system that manages use of a battery in a portable electronic device. During operation, the system uses a reference electrode in the battery to monitor an anode potential of an anode in the battery during charging of the battery in the portable electronic device. If the anode potential falls below an anode potential threshold, the system modifies a charging technique for the battery to extend a cycle life of the battery. For example, the system may reduce a charge current of the battery if the anode potential falls below the anode potential threshold to prevent degradation caused by a negative anode potential during charging of the battery.

JP 2012 049040 A provides a charge controller which can reduce possibility of metal lithium deposition on a negative electrode even when low temperature charging or large current charging is performed. Specifically, a charge controller 100 that controls charging of a secondary battery 200 comprises an open-circuit voltage acquisition unit 110, which acquires the open-circuit voltage between the positive and negative electrodes of the secondary battery 200, a negative electrode closed circuit potential calculation unit 120 which calculates the negative electrode closed circuit potential, i. e. the closed circuit potential of the negative electrode, by using the open-circuit voltage thus acquired, a closed circuit potential determination unit 130 which determines whether or not the negative electrode closed circuit potential thus calculated is less than a predetermined threshold, and a charging current control unit 140 which reduces the value of a current charging the secondary battery 200 when a determination is made that the negative electrode closed circuit potential is less than the predetermined threshold.

US 2006/132101 A1 discusses a thermally managed enclosure for batteries in a motor vehicle or other machinery includes a cradle of thermally conductive material for containing a battery. The cradle having a bottom wall and side walls closely fitted to and in contact with the battery, to maintain the battery in a stable position. The bottom wall of the cradle has a passageway trough containing a tube for flowing heating or cooling fluid therethrough, to control the optimal operating temperature of the battery. The passageway trough is preferably filled with a thermally conductive fill surrounding said tube. When two or more batteries are required, an array of adjacent cradles are provided in a monocoque tray formed by bonding or welding the multiple cradles at their adjacent sides.

Moreover, the different positions of the battery cells in the arrangement of the cells within a battery system or battery pack as well as the thermal connection of the cells to a cooling/heating system of the battery causes different temperature profiles for the cells - those temperature profiles, however, mostly cannot be measured. This causes different risks of Lithium plating for different cell positions.

It is thus an object of the present invention to overcome or reduce at least some of the drawbacks of the prior art and to provide a battery system that avoids the need of tables to define charging current limits in accordance to the environmental conditions or at least reduces significantly reduces the number of required entries in those tables, thereby also avoiding or at least reducing the required testing efforts for the generation of those tables. It is also an object of the present invention to allow for a direct measurement of an anode potential. Further, it is an object of the invention to provide a battery system, which takes into account the different risks of lithium plating due to the different positions of the cell positions within the battery system. It is also an object of the invention to provide both, a battery pack and a vehicle, being equipped with the battery system according to the invention. Moreover, an object of the invention is to provide a method for operating the battery system according to the invention.

**Summary of Invention**

Embodiments of the present disclosure seek to solve at least one of the problems existing in the prior art to at least some extent. In particular, a battery system is provided comprising at least one reference battery cell and at least one non-reference battery cell. Each of the reference battery cells comprises a cathode, an anode, and a reference electrode. Each of the reference battery cells comprises a potential measuring means configured for measuring a reference potential being the potential of the anode of said battery cell relative to the reference electrode of said battery cell, and the potential measuring means further configured for generating a signal corresponding to the measured reference potential. The battery system further comprises a controlling means configured for receiving the signals of each of the potential measurement means and for reducing, during a charging process of the battery system, the charging voltage applied to the battery system upon receiving, from the potential measurement means of at least one reference battery cell, a signal indicating the reference potential of said battery cell being below a predetermined threshold voltage. Each of the reference battery cells and the non-reference battery cells is disposed at a fixed position within the battery system such that each of the positions at which a reference battery cell is disposed is expected to remain, during a charging process of the battery system, at a lower temperature in comparison to the temperature at any one of the positions at which a non-reference cell is disposed.

Note that the terms "reference battery cell" and "non-reference cell" are just used to define two different types of battery cells, viz. a first type comprising a reference electrode (referred to as "reference battery cell") and a second type not comprising a reference electrode (referred to as "non-reference battery cell"). The single cells in the battery system are typically connected in series or in parallel.

The "potential measuring means" may be a voltmeter connected with the anode and the reference electrode of a reference battery cell. As becomes clear from the above, the "reference potential" denotes a potential difference between the anode potential and the potential of the reference electrode.

Preferably, the controlling means is integrated into the BMU of the battery system. However, it may alternatively be integrated, e. g., in the vehicle's controlling system.

The predetermined threshold voltage may depend on the material used for the reference electrode.

To summarize the above description in other words, the battery system according to the invention uses special battery cells for measuring a reference potential of these cells placed on predefined special positions (cold spots) in the target pack and is configured to limit the charging voltage/current accordingly - allowing to measure the risk of lithium plating directly and providing a very efficient usage of the cell's charging capabilities. To that end, the invention exploits that lithium plating can be recognized by measuring the potential of the anode in comparison to that of a reference electrode, e. g., lithium (see below). With this approach, cold spot cells are identified and cells allowing to measure anode potential are placed on these positions.

In one embodiment of the battery system according to the invention, the ratio of the number of reference battery cells relative to the total number of battery cells (i. e., the number of reference battery cells plus the number of non-reference battery cells) is less than 0.5 (i. e., 50 %), preferably less than 0.2 (i. e., 20 %), more preferably less than 0.1 (i. e., 10 %), and most preferably less than 0.05 (i. e., 5 %).

In one embodiment of the battery system according to the invention, the reference electrode is a lithium electrode.

In one embodiment of the battery system according to the invention, the predetermined threshold voltage is 0 V (0 Volt).

In one embodiment of the battery system according to the invention, the charging voltage applied to the battery system is determined in dependence of a temperature of at least one of the reference battery cells (in addition to the dependency on the reference potentials of the reference battery cells).

In one embodiment of the battery system according to the invention, the charging voltage applied to the battery system is determined in dependence of a state of charge (SoC) of at least one of the reference battery cells (in addition to the dependency on the reference potentials of the reference battery cells and/or the temperature of said reference battery cells). Thereby, the state of charge (SoC) of a battery cell may be defined based on the potential between the anode and the cathode of that battery cell.

In one embodiment of the battery system according to the invention, the at least one of the reference battery cells is disposed in a corner of the battery system.

The "corners" of the battery system may be the positions at the corners of a prismatic or cubic housing of the battery system.

In one embodiment of the battery system according to the invention, the battery system further comprises a heating system configured to heat (i. e., to warm up) the battery cells comprised in the battery system.

In one embodiment of the invention, the battery system further comprises a heating system having a heating fluid channel.

In one embodiment of the battery system according to the invention, one of the reference battery cells is the battery cell having the least spatial distance (in comparison to the other battery cells) to the outlet of the heating fluid channel.

In one embodiment of the battery system according to the invention, at least one of the battery cells having a maximum spatial distance (in comparison to the other battery cells) to the fluid channel is a reference battery cell.

A further aspect of the invention is related to a battery pack comprising a battery system according to the invention as described above.

Yet a further aspect of the invention is related to a vehicle comprising a battery system according to the invention or a battery pack according to the invention.

Still a further aspect of the invention is related to a method for charging a battery system, wherein the battery system comprises at least one reference battery cell; at least one non-reference battery cell; wherein of the reference battery cells comprises a cathode, an anode, and a reference electrode; and wherein each of the reference battery cells and the non-reference battery cells is disposed at a fixed position within the battery system such that each of the positions at which a reference battery cell is disposed is expected to remain, during a charging process of the battery system, at a lower temperature in comparison to the temperature at any one of the positions at which a non-reference cell is disposed. The method comprises the following steps of:

a) measuring, for each of the reference battery cells, a reference potential defined as the potential of the anode of said battery cell relative to the reference electrode of said battery cell by a potential measuring means;

b) generating and transmitting, for each of the reference battery cells, a signal corresponding to the reference potential measured in step a) to a controlling means;

c) receiving, by the controlling means, the signals corresponding to the reference potential of the reference battery cells generated in step b);

d) reducing, by the controlling means, the charging voltage applied to the battery system upon receiving, from the potential measurement means of at least one reference battery cell, a signal indicating that the reference potential of said battery cell is below a predetermined threshold voltage.

The remarks as to the terms "potential measuring means," "controlling means," "reference potential," "predetermined threshold voltage," and the like as given above in the context of the battery system according to the invention apply here in a corresponding way.

In one embodiment of the method according to the invention, the steps a) to d) are executed while the battery system is being charged.

In one embodiment of the method according to the invention, the charging voltage applied to the battery system is determined in dependence of a temperature of at least one of the reference battery cells.

In one embodiment of the method according to the invention, the charging voltage applied to the battery system is determined in dependence of a state of charge (SoC) of at least one of the reference battery cells (in addition to the dependency on the reference potentials of the reference battery cells and/or the temperature of said reference battery cells).

In one embodiment of the method of the invention, the reference electrode is a lithium electrode.

In one embodiment of the method according to the invention, the predetermined threshold voltage is 0 V (0 Volt).

In one embodiment of the method according to the invention, the method further comprises a step of
e) increasing, by the controlling means, the charging voltage applied to the battery system upon receiving, from the potential measurement means of each of the reference battery cells, a signal indicating that the reference potential of the respective battery cell is exceeds (i. e., is large than) the predetermined threshold voltage.

In one embodiment of the method according to the invention, the method comprising a step of
f) adjusting, by the controlling means, the charging voltage applied to the battery system such that the signal corresponding to the reference potential of (at least) one of the reference battery cells indicates a reference potential being equal to the predetermined threshold voltage, and each of the signals corresponding to the reference potential of one of the remaining reference battery cells (if more than one reference battery cells are employed in the battery system) indicate a reference potential being equal to or larger than the predetermined threshold voltage.

Step f) may be a combination of steps d) and e), wherein steps d) and e) may be repeatedly executed. Standard algorithms may be used to reduce the applied charging voltage according to step d) and/or increase the applied charging voltage according to step e) in response to the measured reference potential such that the applied charging voltage converges to a value for which the reference potential becomes equal to the predetermined threshold voltage or approximately equal (i. e., up to a certain predefined deviation) to the predetermined threshold voltage.

## Brief Description of the Drawings

Features will become apparent to those of ordinary skill in the art by describing in detail exemplary embodiments with reference to the attached drawings in which:

Fig. 1     is a diagram illustrating a battery cell's anode potential relative to a lithium reference electrode in dependence of a charging voltage applied to the battery cell;

Fig. 2     is a schematic perspective view of a reference battery cell employed in an embodiment of the invention; and

Fig. 3     illustrates schematically a sectional view through an embodiment of the battery system of the invention, wherein a heating system is also indicated schematically.

## Detailed Description of the Invention

Features of the inventive concept and methods of accomplishing the same may be understood more readily by reference to the following detailed description of embodiments and the accompanying drawings. Reference will now be made in detail to embodiments and to components used in embodiments, examples of which are illustrated in the accompanying drawings. Also, effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

In the drawings, the relative sizes of elements, layers, and regions may be exaggerated for clarity. For example, in the drawings, the size or thickness of each element may be arbitrarily shown for illustrative purposes, and thus the embodiments of the present invention should not be construed as being limited thereto.

The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof may not be repeated.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e. g., rotated 90 degrees or at other orientations) and the spatially relative descriptors used herein should be interpreted accordingly.

It will be understood that when an element, component, or layer is referred to as being "on," "connected to," or "coupled to" another element, component, or layer, it can be directly on, connected to, or coupled to the other element, component, or layer, or one or more intervening elements, components, or layers may be present. In addition, it will also be understood that when an element, component, or layer is referred to as being "between" two elements, components, or layers, it can be the only element, component, or layer between the two elements, components, or layers, or one or more intervening elements, components, or layers may also be present.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value. Further, the use of "may" when describing embodiments of the present invention refers to "one or more embodiments of the present invention."

The electronic or electric devices and/or any other relevant devices or components according to embodiments of the present invention described herein may be implemented utilizing any suitable hardware, firmware (e. g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The intense promotion of battery electric vehicles (BEVs) as full replacement of conventional vehicles requires the extensive use of fast charging capabilities due to the limited capacity of the currently available lithium-ion batteries. Fast charging requires high charging power to be supported by battery systems and single battery cells. High energy density cells, which are mostly used in electric vehicles, have high discharge power capabilities but the charging power (i. e., the maximum electric power with which those cells may be charged) is mostly limited. Therefore, a very efficient use of limited charging power is essential for supporting required fast charging capabilities.

Currently, the most limiting factor for efficient usage of cell charging capabilities is the so-called lithium plating. As already described above, lithium plating causes the deposition ("plating") of lithium on the anode of a battery cell during the charging process (making the 'plated' lithium unavailable for the charging of the cell), which strongly reduces the available capacity of the cell and may lead to a considerable risk of safety incidents as well.

The danger (i. e., the probability) of lithium plating occurring in a cell being charged can be measured relatively simple - if the cell is equipped with a reference electrode. In this case, only the anode potential relative to the potential of the reference electrode (in the following referred to as reference potential; see below) has to be supervised: if the reference potential is lower than a certain predefined threshold value $U_{thresh}$, lithium plating occurs. If, however, the reference potential is larger than that threshold value, lithium plating does not occur.

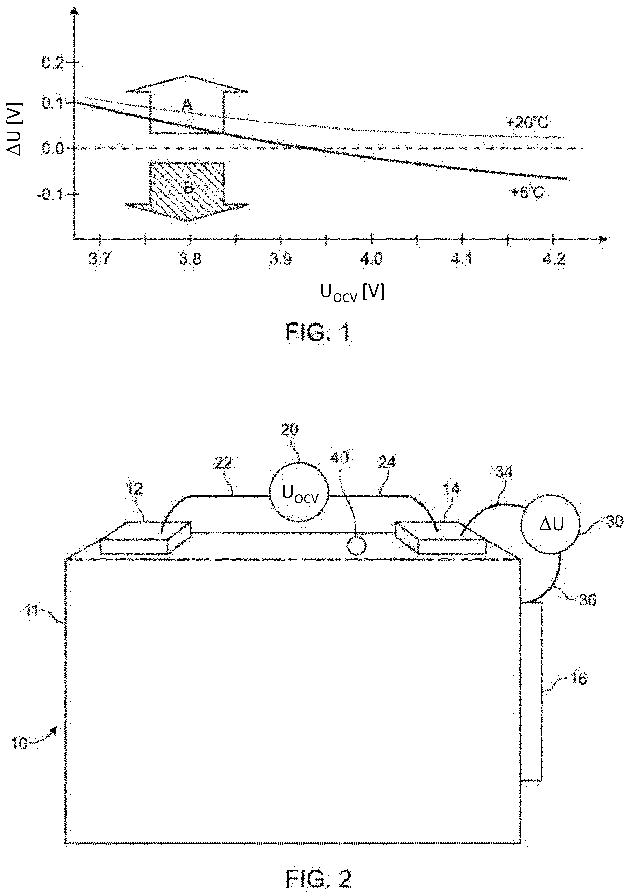

This is explained in the following with the help of Figure 1, which shows a diagram illustrating a battery cell's reference potential $\Delta U$ (measured in Volt) in dependence of an open circuit voltage $U_{OCV}$ (OCV, likewise measured in Volt) of the battery cell for different temperatures T of the cell (the temperatures T = +20° C and T = +5° C are chosen as exemplary temperature values in Fig. 1). In this context, the open circuit voltage $U_{OCV}$ refers to a representation of the charging state of the battery in a relaxed state (rest state). In other words, the open circuit voltage $U_{OCV}$ can be measured between the anode and the cathode of the battery cell, when the battery is in a relaxed state. Further, the reference potential $\Delta U$ is defined as the anode potential relative to a reference electrode. In other words, the reference potential is the potential difference between the electric potential of the anode of the cell and the electric potential of the reference electrode of the cell, i. e., the voltage between the anode and the reference electrode, which can simply be measured, e. g., by a voltmeter.

In the example of Fig. 1, the reference electrode is a lithium electrode, which may be the most simple and thus a preferred choice for the reference electrode, as in this case, the threshold value (denoted in the diagram of Fig. 1 by the dashed line), with which the measured reference potential has to be compared (see above), is 0 V (0 Volt). In other words, lithium plating occurs in case of a lithium reference electrode, if the measured value of the reference potential $\Delta U$ is negative, whereas lithium plating does not occur, if the measured value of the reference potential $\Delta U$ is positive. This is schematically illustrated by the two arrows sketched into Fig. 1: arrow A indicates the area, wherein lithium plating would not occur, i. e., the area of $\Delta U > 0$ V, while arrow B indicates the area, where lithium plating would typically occur, i. e., the area of $\Delta U < 0$ V.

As can be taken from Fig. 1, lithium plating occurs mostly at cold temperatures: The reference potential $\Delta U$ remains positive at a given charging current $I_{charge}$ for the entire range of the open circuit voltage $U_{OCV}$ shown in Fig. 1 (approximately the range from $U_{OCV} = 3.7$ V to $U_{OCV} = 4.2$ V) at a cell temperature T = +20° C. In other words, there is no risk of lithium plating over the whole range of the open circuit voltage $U_{OCV}$ shown in Fig. 1. At a cell temperature T = +5° C, however, the reference potential $\Delta U$ is positive only for open circuit voltages $U_{OCV}$ smaller than about 3.9 V, whereas for open circuit voltages $U_{OCV}$ larger than about 4.0 V, the reference potential $\Delta U$ becomes negative. In other words, lithium plating will typically occur in the shown example for the given charging current $I_{charge}$, when the cell has a temperature of about +5° C and the open circuit voltage $U_{OCV}$ exceeds a value of about 4.0 V.

According to embodiments of the invention, the measured value for the reference potential $\Delta U$ of a preselected (predefined) subset of the cells employed in a battery system can then be used by the battery management algorithms to control and limit the allowed charging current $I_{charge}$ applicable for fast charging of the battery system. The allowed maximum charging current $I_{charge}^{max}$ for the battery system may then be communicated to a charger employed for charging the battery system and/or the vehicle's controlling system.

For a certain cell, the maximum allowed charging current is the charging current for which, at a given cell temperature T, the reference potential remains positive. In general, as the reference potential $\Delta U$ of a cell is a function of the charging current $I_{charge}$ applied to the cell, $U_{OCV}$ and the temperature T of the cell, i. e., $\Delta U = f(I_{charge}, T, U_{OCV})$, the allowed maximum charging current $I_{max}^{(cell)}$ for that particular cell is then implicitly given by the relation

$$f\left(I_{max}^{(cell)}, T, U_{OCV}\right) = U_{thresh}$$

with $U_{thresh}$ being the predefined threshold potential, with the help of which it can be decided, whether or not lithium plating occurs in the cell by comparing it with the measured value for the reference potential $\Delta U$ (see above). As in case of a lithium reference electrode, the threshold potential vanishes, i. e., $U_{thresh}^{(lithium)} = 0$, the above relation simplifies to

$$f\left(I_{max}^{(cell)}, T, U_{OCV}\right) = 0$$

for this case. Thus, when a reference potential $\Delta U \neq U_{thresh}$ (or $\Delta U \neq 0$ in the preferred case of a lithium reference electrode) is detected, control algorithms may then vary the charging current applied to the cell as long as $\Delta U = U_{thresh}$ (or $\Delta U = 0$ for a lithium reference electrode) is, at least approximately, fulfilled. To that end, a monotonous behavior of the reference potential $\Delta U$ with regard to the applied charging current $I_{charge}$ in the interesting range for $I_{charge}$ may be exploited.

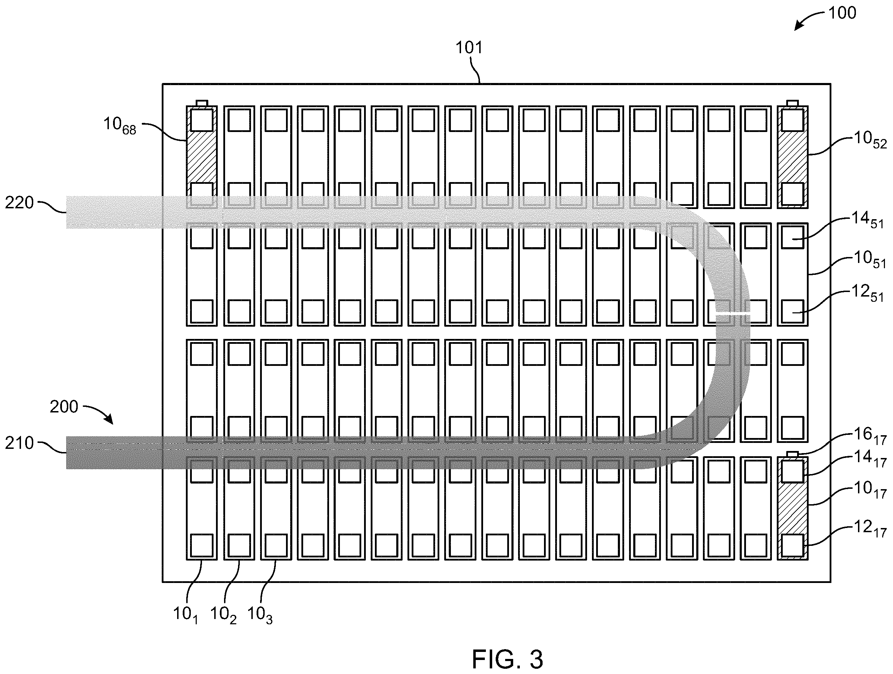

The preselected cells of the battery system, for which a reference potential is measured (referred to as "reference battery cells" in the following), may be these cells, which - due to their spatial position within the battery system relative to the ambient atmosphere surrounding the battery system and/or relative to a heating system of the battery system - are expected to have the coldest temperature in comparison to the other cells during the charging process (see the below description as to Fig. 3).

Note that several reference battery cells may be exposed - and will typically be exposed - to different temperatures and that the determined allowed maximum charging current may be different for these cells. Thus, if for each of the reference battery cells the allowed maximum charging current has been determined, an allowed maximum charging current $I_{charge}^{max}$ for the battery system may then be determined based on the allowed maximum charging value for the single reference battery cells. For example, if the battery system comprises N cells in total and M reference battery cells (with M < N) and the allowed maximum charging currents for these cells are denoted by $I_{charge}^{(1)}$, $I_{charge}^{(2)}$, ..., $I_{charge}^{(M)}$, respectively, the allowed maximum charging current $I_{charge}^{max}$ for the complete battery system may be determined to be

$$I_{charge}^{max} = N \cdot \min\{I_{charge}^{(1)}, I_{charge}^{(2)}, \dots, I_{charge}^{(M)}\},$$

if the cells are connected in parallel in the battery system, or to be

$$I_{charge}^{max} = \min\{I_{charge}^{(1)}, I_{charge}^{(2)}, \dots, I_{charge}^{(M)}\},$$

if the cells are connected in series in the battery system, and if the battery cells are configured to be charged with the same charging power. This way, it is assured that for none of the reference battery cells, the applied charging current exceeds the respective allowed maximum charging current. Of course, embodiments may also user other formulas to determine the allowed maximum charging current $I_{charge}^{max}$ for the complete battery system.

Figure 2 shows a schematic view of a battery cell 10 designed as a reference battery cell that may be employed in embodiments of the invention. The battery cell 10 has a housing 11 encasing the electrochemically active components of the battery cell 10 such as the electrolyte, the separator, the anode, and the cathode. The cathode (inside the housing 11; not visible in the figure) is electrically connected with a cathode connector 12 made of a conducting material (which is, for the sake of brevity, simply referred to as "cathode 12" in the following, as due to the electric connection, the cathode inside the housing 11 and the cathode connector 12 are at the same electric potential). Correspondingly, the anode (inside the housing 11; thus not visible in the figure) is electrically connected with an anode connector 14 made of a conducting material (which is, for the sake of brevity, simply referred to as "anode 14" in the following for similar reasons as described above for the cathode).

The voltage provided by the cell 10 when in a use state (i. e., in a state not being charged), is the potential difference between the cathode 12 and the anode 14. The potential difference between the cathode 12 and the anode 14 may be measured by a means 20 for measuring an electric potential (such as a voltmeter) connected, via an electric connection 22 to the cell's cathode 12 and via a further electric connection 24 to the cell's anode 14. Via the means 20, the state of charge (SoC) of the cell may be supervised. When being charged, the potential difference between the cathode 12 and the anode 14 corresponds to the charging voltage $U_{OCV}$. However, in embodiments of the reference battery cell 10, the measurement of the potential difference between the cathode 12 and the anode 14 may be omitted, i. e., those cells 10 are not equipped with the means 20 for measuring an electric potential between the cell's cathode 12 and anode 14, and also, the connections 22 and 24 are then redundant.

Further, the reference battery cell 10 is equipped with a reference electrode cathode (inside the housing 11; not visible in the figure). The reference electrode may be made of lithium. The reference electrode is electrically connected with a reference electrode connector 16 made of a conducting material (which is, for the sake of brevity, simply referred to as "reference electrode 16" in the following, as due to the electric connection, the reference electrode inside the housing 11 and the reference electrode connector 16 are at the same electric potential, even if the connector 16 itself is not made of the same material as the reference electrode inside the housing 11).

The potential difference between the anode 14 and the reference electrode 16 is measured by a further means 30 for measuring an electric potential (such as a voltmeter) connected, via an electric connection 34 to the cell's anode 14 and via a further electric connection 36 to the cell's reference electrode 16. Thus, the potential measuring means 30 is configured to measure the reference potential ΔU of the reference battery cell 10. The potential measuring means 30 is further configured to generate and to send a signal corresponding to a control unit configured for evaluating this signal (see below).

In embodiments of the battery system, at least some of the employed reference battery cells 10 may be further equipped with a temperature sensor 40 for measuring the cell's temperature T and for generating and sending a corresponding temperature signal to a control unit configured for evaluating the temperature signal.

The employment of reference battery cells as described before with reference to Fig. 2 in a battery system according to an embodiment of the invention is illustrated by Figure 3. Single reference battery cells (i. e., cells being specially equipped with reference electrodes as described in the context of Fig. 2) are placed on special positions into a state-of-the-art battery module. These positions are preselected "cold spots" within the battery system, i. e., positions, which are expected to have the lowest temperature during a charging process of the battery system. Specifically, these "cold spots" may be selected by considering the characteristics of a cooling/heating system integrated in the battery system and/or characteristics of the housing of the battery system. Then, only for those reference battery cells, the respective reference potentials ΔU are measured, and depending on these values, the maximum allowed fast charge current $I_{charge}^{max}$ for of the complete battery system is limited by the battery management algorithms and communicated to the charger used for charging the battery system and/or to the vehicle's controlling system; see the above description as to Fig. 1. This allows to exactly measure the risk of lithium plating online and in real-time, and to react accordingly by limiting charging current immediately.

Fig. 3 shows schematically a sectional view through an embodiment of the battery system of the invention. In this example, the battery system 100 comprises plurality of 68 battery cells $10_1$, $10_2$, $10_3$, ..., $10_{17}$, ..., $10_{51}$, $10_{52}$, ..., $10_{68}$. Three of the battery cells are designed as reference battery cells $10_{17}$, $10_{52}$, $10_{68}$, i. e, these cells are equipped with a reference electrode. This is exemplarily shown for the reference battery cell $10_{17}$ positioned, with regard to the figure, at the lower right corner of the battery system 100. As each of the reference battery cells $10_{17}$, $10_{52}$, $10_{68}$, reference battery cell $10_{17}$ comprises not only a cathode $12_{17}$ and an anode $14_{17}$, but also a reference electrode $16_{17}$, which may be a reference electrode made of lithium. The 65 remaining cells, however, are not designed as reference battery cells, i. e., these cells do not comprise a reference electrode. This is exemplarily illustrated for battery cell $10_{51}$, which comprises a cathode $12_{51}$ and an anode $14_{51}$, but no reference electrode.

In the example illustrated in Fig. 3, the selection of the positions for the reference battery cells $10_{17}$, $10_{52}$, $10_{68}$ has been made in consideration of the question, which cell positions within the battery system 100 are expected to be the coldest positions during the charge of the battery system 100, i. e., which three battery cell positions are expected to remain at the lowest temperature in comparison to each of the other cell positions.

The battery system 100 of Fig. 3 is also equipped with a heating system. The heating system may be arranged below the stacks of battery cells as depicted in the figure; nevertheless, the flow of heating fluid is indicated, in Fig. 3, in a schematic way, by a U-shaped flow channel or flow path 200 (referred to as "heating fluid channel 200"). Hot or warm heating fluid 210 provided by an (external) heating fluid supply (not shown) enters the heating system, and cools down while following the heating fluid channel 200 defined, e. g., by a pipe, as the warmth of the heating fluid is transferred to the battery cells $10_1, 10_2, 10_3, ..., 10_{17}, ..., 10_{51}, 10_{52}, ..., 10_{68}$ of the battery system 100. Finally, cool fluid 220 is then exiting the heating system and the battery system 100. The gradual and continuous dissipation of heat from the fluid while following the heating fluid channel 200 is indicated by the fading strength of the grayscale used to depict the heating fluid channel 200. From the geometry of the housing 101 of the battery system 100 and the heating fluid channel 200, the coldest spots within the battery system 100 can be derived: On the one hand, the positions in the upper right corner and the lower right corner (with regard to Fig. 3) are expected to remain at a lower temperature than other cells, as these positions exhibit the maximum spatial distance to the heating fluid channel 200. Thus, the heat transfer to the cell $10_{52}$ in the upper right corner and to the cell $10_{17}$ in the lower right corner is expected to be weak. Also, these cells are neighbored to the housing 101 of the battery system 100 such that they may be additionally cooled when the temperature of the ambient air / atmosphere of the battery system 100 is cold.

Further, for the reasons described before, the heat of the heating fluid decreases while flowing through the heating fluid channel 200. Thus, the also the heat transfer to the cell having the least distance to the exiting fluid 220 is expected to be weak; in the example shown, this is the cell $10_{68}$ in the upper left corner. Hence, it is expected that the above-identified cells $10_{17}, 10_{52}$, and $10_{68}$ are at positions that are expected to remain colder than the other positions during a charge of the battery system 100. These cells $10_{17}, 10_{52}, 10_{68}$ are thus selected to be designed as reference battery cells as described with reference to Fig. 2.

The reference potentials measured for the reference cells $10_{17}, 10_{52}, 10_{68}$ (or more precise: corresponding measurement signals) via a potential measurement means 30 as described before with reference to Fig. 2 may then be transmitted to a controlling means (not shown) configured to control the charging current / charging voltage applied to the complete battery system 100 as described above in the context of Fig. 1.

## Reference signs

| | |
|---|---|
| 10 | reference battery cell |
| $10_1, ..., 10_{68}$ | battery cells |
| $10_{17}, 10_{52}, 10_{68}$ | reference battery cell |
| $10_5,$ | non-reference battery cell |
| 11 | housing of a battery cell |
| 12 | cathode of a battery cell |
| $12_1, ..., 12_{68}$ | cathodes of respective battery cells |
| 14 | anode of a battery cell |
| $14_1, ..., 14_{68}$ | anodes of respective battery cells |
| 16, $16_{17}$ | reference electrodes |
| 20 | means for measuring the potential difference between a battery cell's cathode and anode |
| 22, 24 | electric connections |
| 30 | means for measuring the potential difference between a reference battery cell's anode and reference electrode |
| 34, 36 | electric connections |
| 40 | temperature measurement means |
| 100 | battery system |
| 101 | housing of battery system |
| 200 | heating fluid channel |
| 210 | heating fluid entering into a heating fluid channel |
| 220 | heating fluid exiting from a heating fluid channel |
| $\Delta U$ | reference potential |
| $U_{OCV}$ | open circuit voltage (OCV) |
| $I_{charge}$ | charging current |

**Claims**

1. A battery system (100) comprising:

   at least one reference lithium-ion battery cell (10, $10_{17}, 10_{52}, 10_{68}$); and
   at least one non-reference lithium-ion battery cell ($10_{51}$);
   wherein each of the reference lithium-ion battery cells (10, $10_{17}, 10_{52}, 10_{68}$) comprises a cathode (12, $12_{17}$), an anode (14, $14_{17}$), and a reference electrode (16, $16_{17}$);

wherein each of the reference lithium-ion battery cells (10, $10_{17}$, $10_{52}$, $10_{68}$) comprises a potential measuring means (30) configured for measuring a reference potential ($\Delta U$) being the potential of the anode (14, $14_{17}$) of said lithium-ion battery cell relative to the reference electrode (16, $16_{17}$) of said lithium-ion battery cell, and the potential measuring means (30) further configured for generating a signal corresponding to the measured reference potential ($\Delta U$);
wherein the battery system (100) comprises a controlling means configured for receiving the signals of each of the potential measurement means (30) and for reducing, during a charging process of the battery system (100), a charging current ($I_{charge}$) applied to the battery system (100) upon receiving, from the potential measurement means (30) of at least one reference lithium-ion battery cell (10, $10_{17}$, $10_{52}$, $10_{68}$), a signal indicating the reference potential ($\Delta U$) of said lithium-ion battery cell being below a predetermined threshold voltage; and
wherein each of the reference lithium-ion battery cells (10, $10_{17}$, $10_{52}$, $10_{68}$) and the non-reference lithium-ion battery cells ($10_{51}$) is disposed at a fixed position within the battery system (100) such that each of the positions at which a reference lithium-ion battery cell (10, $10_{17}$, $10_{52}$, $10_{68}$) is disposed is expected to remain, during a predefined charging process of the battery system (100), at a lower temperature (T) in comparison to the temperature at any one of the positions at which a non-reference lithium-ion battery cell ($10_{51}$) is disposed.

2. The battery system (100) according to claim 1, wherein the ratio of the number of reference lithium-ion battery cells (10, $10_{17}$, $10_{52}$, $10_{68}$) relative to the total number of lithium-ion battery cells ($10_1$, $10_2$, $10_3$, ..., $10_{17}$, ..., $10_{51}$, $10_{52}$, ..., $10_{68}$) is less than 0.5, preferably less than 0.2, more preferably less than 0.1, and most preferably less than 0.05.

3. The battery system (100) according to claim 1 or 2, wherein reference electrode (16) is a lithium electrode.

4. The battery system (100) according to any one of claims 1 to 3, wherein the charging current ($I_{charge}$) applied to the battery system (100) is determined in dependence of a temperature (T) of at least one of the reference lithium-ion battery cells (10, $10_{17}$, $10_{52}$, $10_{68}$).

5. The battery system (100) according to any one of claims 1 to 4, wherein the charging current ($I_{charge}$) applied to the battery system (100) is determined in dependence of a state of charge, SoC, of at least one of the reference lithium-ion battery cells (10, $10_{17}$, $10_{52}$, $10_{68}$).

6. The battery system (100) according (100) to any one of claims 1 to 5, wherein at least one of the reference lithium-ion battery cells (10, $10_{17}$, $10_{52}$, $10_{68}$) is disposed in a corner of the battery system (100).

7. The battery system (100) according to any one of claims 1 to 6, further comprising a heating system having a heating fluid channel (200).

8. The battery system (100) according to claim 7, wherein one of the reference lithium-ion battery cells ($10_{68}$) is the lithium-ion battery cell having the least spatial distance to the outlet (220) of the heating fluid channel (200).

9. The battery system (100) according to claim 7 or 8, wherein at least one of the lithium-ion battery cells having a maximum spatial distance to the fluid channel (200) is a reference lithium-ion battery cell ($10_{17}$, $10_{52}$).

10. A battery pack comprising a battery system (100) according to any one of claims 1 to 9.

11. A vehicle comprising a battery system (100) according to any one of claims 1 to 9 or a battery pack according to claim 10.

12. A method for charging a battery system (100), wherein the battery system (100) comprises at least one reference lithium-ion battery cell (10, $10_{17}$, $10_{52}$, $10_{68}$); at least one non-reference lithium-ion battery cell ($10_{51}$); wherein of the reference lithium-ion battery cells (10, $10_{17}$, $10_{52}$, $10_{68}$) comprises a cathode (12, $12_{17}$), an anode (14, $14_{17}$), and a reference electrode (16, $16_{17}$); and wherein each of the reference lithium-ion battery cells (10, $10_{17}$, $10_{52}$, $10_{68}$) and the non-reference lithium-ion battery cells ($10_{51}$) is disposed at a fixed position within the battery system (100) such that each of the positions at which a reference lithium-ion battery cell (10, $10_{17}$, $10_{52}$, $10_{68}$) is disposed is expected to remain, during a predefined charging process of the battery system (100), at a lower temperature in comparison to the temperature at any one of the positions at which a non-reference lithium-ion battery cell ($10_{51}$) is disposed; the method comprising:

   a) measuring, for each of the reference lithium-ion battery cells (10, $10_{17}$, $10_{52}$, $10_{68}$), a reference potential ($\Delta U$) defined as the potential of the anode (14, $14_{17}$) of said lithium-ion battery cell relative to the reference electrode (16, $16_{17}$) of said lithium-ion battery cell by a potential measuring means (30);

b) generating and transmitting, for each of the reference lithium-ion battery cells (10, $10_{17}$, $10_{52}$, $10_{68}$), a signal corresponding to the reference potential ($\Delta U$) measured in step a) to a controlling means;

c) receiving, by the controlling means, the signals corresponding to the reference potential ($\Delta U$) of the reference lithium-ion battery cells (10, $10_{17}$, $10_{52}$, $10_{68}$) generated in step b);

d) reducing, by the controlling means, a charging current ($I_{charge}$) applied to the battery system (100) upon receiving, from the potential measurement means (30) of at least one reference lithium-ion battery cell (10, $10_{17}$, $10_{52}$, $10_{68}$), a signal indicating that the reference potential ($\Delta U$) of said lithium-ion battery cell is below a predetermined threshold voltage.

13. The method according to claim 12, wherein the charging current ($I_{charge}$) applied to the battery system (100) is determined in dependence of a temperature (T) of at least one of the reference lithium-ion battery cells (10, $10_{17}$, $10_{52}$, $10_{68}$), and/or wherein the charging current ($I_{charge}$) applied to the battery system (100) is determined in dependence of a state of charge, SoC, of at least one of the reference lithium-ion battery cells (10, $10_{17}$, $10_{52}$, $10_{68}$).

14. The method according to claim 12 or 13, further comprising a step of

e) increasing, by the controlling means, the charging current ($I_{charge}$) applied to the battery system (100) upon receiving, from the potential measurement means (30) of each of the reference lithium-ion battery cells (10, $10_{17}$, $10_{52}$, $10_{68}$), a signal indicating that the reference potential ($\Delta U$) of the respective lithium-ion battery cell exceeds the predetermined threshold voltage.

15. The method according to any one of claims 12 to 14, comprising a step of

f) adjusting, by the controlling means, the charging current ($I_{charge}$) applied to the battery system (100) such that the signal corresponding to the reference potential ($\Delta U$) of one of the reference lithium-ion battery cells (10, $10_{17}$, $10_{52}$, $10_{68}$) indicates a reference potential ($\Delta U$) being equal to the predetermined threshold voltage, and each of the signals corresponding to the reference potential ($\Delta U$) of one of the remaining reference lithium-ion battery cells indicates a reference potential ($\Delta U$) being equal to larger than the predetermined threshold voltage.

**Patentansprüche**

1. Batteriesystem (100), umfassend:

mindestens eine Referenz-Lithium-Ionen-Batteriezelle (10, $10_{17}$, $10_{52}$, $10_{68}$); und
mindestens eine Nicht-Referenz-Lithium-Ionen-Batteriezelle ($10_{51}$);
wobei jede der Referenz-Lithium-Ionen-Batteriezellen (10, $10_{17}$, $10_{52}$, $10_{68}$) eine Kathode (12, $12_{17}$), eine Anode (14, $14_{17}$) und eine Referenzelektrode (16, $16_{17}$) umfasst;
wobei jede der Referenz-Lithium-Ionen-Batteriezellen (10, $10_{17}$, $10_{52}$, $10_{68}$) eine Potentialmesseinrichtung (30) umfasst, die zum Messen eines Referenzpotentials ($\Delta U$) konfiguriert ist, das das Potential der Anode (14, $14_{17}$) der Lithium-Ionen-Batteriezelle relativ zur Referenzelektrode (16, $16_{17}$) der Lithium-Ionen-Batteriezelle ist, und wobei die Potentialmesseinrichtung (30) ferner dazu konfiguriert ist, ein Signal zu erzeugen, das dem gemessenen Referenzpotential ($\Delta U$) entspricht;
wobei das Batteriesystem (100) eine Steuereinrichtung umfasst, die so konfiguriert ist, dass sie die Signale jeder der Potentialmesseinrichtungen (30) empfängt und während eines Ladevorgangs des Batteriesystems (100) einen an das Batteriesystem (100) angelegten Ladestrom ($I_{charge}$) reduziert, wenn von der Potentialmesseinrichtung (30) mindestens einer Referenz-Lithium-Ionen-Batteriezelle (10, $10_{17}$, $10_{52}$, $10_{68}$) ein Signal empfangen wird, das angibt, dass das Referenzpotential ($\Delta U$) der Lithium-Ionen-Batteriezelle unter einer vorbestimmten Schwellenspannung liegt; und
wobei jede der Referenz-Lithium-Ionen-Batteriezellen (10, $10_{17}$, $10_{52}$, $10_{68}$) und der Nicht-Referenz-Lithium-Ionen-Batteriezellen ($10_{51}$) an einer festen Position innerhalb des Batteriesystems (100) angeordnet ist, so dass jede der Positionen, an denen eine Referenz-Lithium-Ionen-Batteriezelle (10, $10_{17}$, $10_{52}$, $10_{68}$) angeordnet ist, während eines vordefinierten Ladevorgangs des Batteriesystems (100) voraussichtlich eine niedrigere Temperatur (T) aufweist als die Temperatur an einer der Positionen, an denen eine Nicht-Referenz-Lithium-Ionen-Batteriezelle ($10_{51}$) angeordnet ist.

2. Batteriesystem (100) nach Anspruch 1, wobei das Verhältnis der Anzahl der Referenz-Lithium-Ionen-Batteriezellen (10, $10_{17}$, $10_{52}$, $10_{68}$) zur Gesamtzahl der Lithium-Ionen-Batteriezellen ($10_1$, $10_2$, $10_3$, ..., $10_{17}$, ..., $10_{51}$, $10_{52}$, ..., $10_{68}$) weniger als 0,5, vorzugsweise weniger als 0,2, noch bevorzugter weniger als 0,1 und am meisten bevorzugt weniger als 0,05 beträgt.

3. Batteriesystem (100) nach Anspruch 1 oder 2, wobei die Referenzelektrode (16) eine Lithiumelektrode ist.

4. Batteriesystem (100) nach einem der Ansprüche 1 bis 3, wobei der an das Batteriesystem (100) angelegte Ladestrom ($I_{charge}$) in Abhängigkeit von einer Temperatur (T) mindestens einer der Referenz-Lithium-Ionen-Batteriezellen (10, $10_{17}$, $10_{52}$, $10_{68}$) bestimmt wird.

5. Batteriesystem (100) nach einem der Ansprüche 1 bis 4, wobei der an das Batteriesystem (100) angelegte Ladestrom ($I_{charge}$) in Abhängigkeit von einem Ladezustand (kurz: SoC) mindestens einer der Referenz-Lithium-Ionen-Batteriezellen (10, $10_{17}$, $10_{52}$, $10_{68}$) bestimmt wird.

6. Batteriesystem (100) nach einem der Ansprüche 1 bis 5, wobei mindestens eine der Referenz-Lithium-Ionen-Batteriezellen (10, $10_{17}$, $10_{52}$, $10_{68}$) in einer Ecke des Batteriesystems (100) angeordnet ist.

7. Batteriesystem (100) nach einem der Ansprüche 1 bis 6, umfassend ferner ein Heizsystem mit einem Heizfluidkanal (200).

8. Batteriesystem (100) nach Anspruch 7, wobei eine der Referenz-Lithium-Ionen-Batteriezellen ($10_{68}$) die Lithium-Ionen-Batteriezelle mit dem geringsten räumlichen Abstand zum Auslass (220) des Heizfluidkanals (200) ist.

9. Batteriesystem (100) nach Anspruch 7 oder 8, wobei mindestens eine der Lithium-Ionen-Batteriezellen mit einem maximalen räumlichen Abstand zum Fluidkanal (200) eine Referenz-Lithium-Ionen-Batteriezelle ($10_{17}$, $10_{52}$) ist.

10. Batteriepack, umfassend ein Batteriesystem (100) nach einem der Ansprüche 1 bis 9.

11. Fahrzeug, umfassend ein Batteriesystem (100) nach einem der Ansprüche 1 bis 9 oder einen Batteriepack nach Anspruch 10.

12. Verfahren zum Laden eines Batteriesystems (100), wobei das Batteriesystem (100) Folgendes umfasst: mindestens eine Referenz-Lithium-Ionen-Batteriezelle (10, $10_{17}$, $10_{52}$, $10_{68}$); mindestens eine Nicht-Referenz-Lithium-Ionen-Batteriezelle ($10_{51}$); wobei jede der Referenz-Lithium-Ionen-Batteriezellen (10, $10_{17}$, $10_{68}$) eine Kathode (12, $12_{17}$), eine Anode (14, $14_{17}$) und eine Referenzelektrode (16, $16_{17}$) umfasst; und wobei jede der Referenz-Lithium-Ionen-Batteriezellen (10, $10_{17}$, $10_{52}$, $10_{68}$) und der Nicht-Referenz-Lithium-Ionen-Batteriezellen ($10_{51}$) an einer festen Position innerhalb des Batteriesystems (100) angeordnet ist, so dass jede der Positionen, an denen eine Referenz-Lithium-Ionen-Batteriezelle (10, $10_{17}$, $10_{52}$, $10_{68}$) angeordnet ist, während eines vordefinierten Ladevorgangs des Batteriesystems (100) voraussichtlich eine niedrigere Temperatur aufweist als die Temperatur an einer der Positionen, an der eine Nicht-Referenz-Lithium-Ionen-Batteriezelle ($10_{51}$) angeordnet ist; wobei das Verfahren Folgendes umfasst:

a) Messen eines Referenzpotentials ($\Delta U$) für jede der Referenz-Lithium-Ionen-Batteriezellen (10, $10_{17}$, $10_{52}$, $10_{68}$) mittels einer Potentialmesseinrichtung (30), das als das Potential der Anode (14, $14_{17}$) der Lithium-Ionen-Batteriezelle relativ zur Referenzelektrode (16, $16_{17}$) der Lithium-Ionen-Batteriezelle definiert ist;
b) Erzeugen und Übertragen eines Signals für jede der Referenz-Lithium-Ionen-Batteriezellen (10, $10_{17}$, $10_{52}$, $10_{68}$), das dem in Schritt a) gemessenen Referenzpotential ($\Delta U$) entspricht, an eine Steuereinrichtung;
c) Empfangen der Signale, die dem in Schritt b) erzeugten Referenzpotential ($\Delta U$) der Referenz-Lithium-Ionen-Batteriezellen (10, $10_{17}$, $10_{52}$, $10_{68}$) entsprechen, durch die Steuereinrichtung;
d) Reduzieren eines an das Batteriesystem (100) angelegten Ladestroms ($I_{charge}$) durch die Steuereinrichtung beim Empfang eines Signals von der Potentialmesseinrichtung (30) mindestens einer Referenz-Lithium-Ionen-Batteriezelle (10, $10_{17}$, $10_{52}$, $10_{68}$), das angibt, dass das Referenzpotential ($\Delta U$) der Lithium-Ionen-Batteriezelle unter einer vorbestimmten Schwellenspannung liegt.

13. Verfahren nach Anspruch 12, wobei der an das Batteriesystem (100) angelegte Ladestrom ($I_{charge}$) in Abhängigkeit von einer Temperatur (T) mindestens einer der Referenz-Lithium-Ionen-Batteriezellen (10, $10_{17}$, $10_{52}$, $10_{68}$) bestimmt wird und/oder wobei der an das Batteriesystem (100) angelegte Ladestrom ($I_{charge}$) in Abhängigkeit von einem Ladezustand (kurz: SoC) mindestens einer der Referenz-Lithium-Ionen-Batteriezellen (10, $10_{17}$, $10_{52}$, $10_{68}$) bestimmt wird.

14. Verfahren nach Anspruch 12 oder 13, umfassend ferner einen Schritt des
e) Erhöhens des an das Batteriesystem (100) angelegten Ladestroms ($I_{charge}$) durch die Steuereinrichtung, wenn von der Potentialmesseinrichtung (30) jeder der Referenz-Lithium-Ionen-Batteriezellen (10, $10_{17}$, $10_{52}$, $10_{68}$) ein Signal empfangen wird, das angibt, dass das Referenzpotential ($\Delta U$) der jeweiligen Lithium-Ionen-Batteriezelle die vorbestimmte Schwellenspannung überschreitet.

15. Verfahren nach einem der Ansprüche 12 bis 14, umfassend einen Schritt des
f) Einstellens des an das Batteriesystem (100) angelegten Ladestroms ($I_{charge}$) durch die Steuereinrichtung, so dass das dem Referenzpotential ($\Delta U$) einer der Referenz-Lithium-Ionen-Batteriezellen (10, $10_{17}$, $10_{52}$, $10_{68}$) entsprechende Signal ein Referenzpotential ($\Delta U$) angibt, das gleich der vorbestimmten Schwellenspannung ist, während jedes der Signale, die dem Referenzpotential ($\Delta U$) einer der verbleibenden Referenz-Lithium-Ionen-Batteriezellen entsprechen, ein Referenzpotential ($\Delta U$) angibt, das gleich oder größer als die vorbestimmte Schwellenspannung ist.

**Revendications**

1. Système de batterie (100), comportant :

au moins une cellule de batterie lithium-ion de référence (10, $10_{17}$, $10_{52}$, $10_{68}$) ; et
au moins une cellule de batterie lithium-ion pas de référence ($10_{51}$) ;
dans lequel chacune des cellules de batterie lithium-ion de référence (10, $10_{17}$, $10_{52}$, $10_{68}$) comporte une cathode (12, $12_{17}$), une anode (14, $14_{17}$), et une électrode de référence (16, $16_{17}$) ;
dans lequel chacune des cellules de batterie lithium-ion de référence (10, $10_{17}$, $10_{52}$, $10_{68}$) comporte un moyen de mesure de potentiel (30) configuré pour mesurer un potentiel de référence ($\Delta U$) étant le potentiel de l'anode (14, $14_{17}$) de ladite cellule de batterie lithium-ion par rapport à l'électrode de référence (16, $16_{17}$) de ladite cellule de batterie lithium-ion, et le moyen de mesure de potentiel (30) étant en outre configuré pour générer un signal correspondant au potentiel de référence ($\Delta U$) mesuré ;
dans lequel le système de batterie (100) comporte un moyen de commande configuré pour recevoir les signaux de chacun des moyens de mesure de potentiel (30) et pour réduire, pendant un processus de charge du système de batterie (100), un courant de charge ($I_{charge}$) appliqué au système de batterie (100) lors de la réception, à partir du moyen de mesure de potentiel (30) d'au moins une cellule de batterie lithium-ion de référence (10, $10_{17}$, $10_{52}$, $10_{68}$), un signal indiquant que le potentiel de référence ($\Delta U$) de ladite cellule de batterie lithium-ion est inférieur à une tension seuil prédéterminée ; et
dans lequel chacune des cellules de batterie lithium-ion de référence (10, $10_{17}$, $10_{52}$, $10_{68}$) et les cellules de batterie lithium-ion pas de référence ($10_{51}$) est disposée dans une position fixe au sein du système de batterie (100) de sorte que chacune des positions dans lesquelles une cellule de batterie lithium-ion de référence (10, $10_{17}$, $10_{52}$, $10_{68}$) est disposée doive rester, pendant un processus de charge prédéfini du système de batterie (100), à une température (T) inférieure à la température dans l'une quelconque des positions dans laquelle une cellule de batterie lithium-ion pas de référence ($10_{51}$) est disposée.

2. Système de batterie (100) selon la revendication 1, dans lequel le rapport du nombre de cellules de batterie lithium-ion de référence (10, $10_{17}$, $10_{52}$, $10_{68}$) par rapport au nombre total de cellules de batterie lithium-ion (10$_1$, 10$_2$, 10$_3$, ..., $10_{17}$, ..., $10_{51}$, $10_{52}$, ..., $10_{68}$) est inférieur à 0,5, de préférence inférieur à 0,2, plus préférentiellement inférieur à 0,1, et le plus préférentiellement inférieur à 0,05.

3. Système de batterie (100) selon la revendication 1 ou 2, dans lequel l'électrode de référence (16) est une électrode au lithium.

4. Système de batterie (100) selon l'une quelconque des revendications 1 à 3, dans lequel le courant de charge ($I_{charge}$) appliqué au système de batterie (100) est déterminé en fonction d'une température (T) d'au moins l'une des cellules de batterie lithium-ion de référence (10, $10_{17}$, $10_{52}$, $10_{68}$).

5. Système de batterie (100) selon l'une quelconque des revendications 1 à 4, dans lequel le courant de charge ($I_{charge}$) appliqué au système de batterie (100) est déterminé en fonction d'un état de charge, SoC, d'au moins l'une des cellules de batterie lithium-ion de référence (10, $10_{17}$, $10_{52}$, $10_{68}$).

6. Système de batterie (100) selon l'une quelconque des revendications 1 à 5, dans lequel au moins l'une des cellules de batterie lithium-ion de référence (10, $10_{17}$, $10_{52}$, $10_{68}$) est disposée dans un coin du système de batterie (100).

7. Système de batterie (100) selon l'une quelconque des revendications 1 à 6, comportant en outre un système de chauffage présentant un canal de fluide chauffant (200).

8. Système de batterie (100) selon la revendication 7, dans lequel l'une des cellules de batterie lithium-ion de référence ($10_{68}$) est la cellule de batterie lithium-ion présentant la distance spatiale la plus faible à la sortie (220) du canal de fluide chauffant (200).

9. Système de batterie (100) selon la revendication 7 ou 8, dans lequel au moins l'une des cellules de batterie lithium-ion présentant une distance spatiale maximale au canal de fluide (200) est une cellule de batterie lithium-ion de référence ($10_{17}$, $10_{52}$).

**10.** Bloc-batterie comportant un système de batterie (100) selon l'une quelconque des revendications 1 à 9.

**11.** Véhicule comportant un système de batterie (100) selon l'une quelconque des revendications 1 à 9 ou un bloc-batterie selon la revendication 10.

**12.** Procédé de charge d'un système de batterie (100), dans lequel le système de batterie (100) comporte au moins une cellule de batterie lithium-ion de référence (10, $10_{17}$, $10_{52}$, $10_{68}$) ; au moins une cellule de batterie lithium-ion pas de référence ($10_{51}$) ; dans lequel chacune des cellules de batterie lithium-ion de référence (10, $10_{17}$, $10_{52}$, $10_{68}$) comporte une cathode (12, $12_{17}$), une anode (14, $14_{17}$), et une électrode de référence (16, $16_{17}$) ; et dans lequel chacune des cellules de batterie lithium-ion de référence (10, $10_{17}$, $10_{52}$, $10_{68}$) et des cellules de batterie lithium-ion pas de référence (10 $_{51}$) est disposée dans une position fixe au sein du système de batterie (100) de sorte que chacune des positions dans laquelle une cellule de batterie lithium-ion de référence (10, $10_{17}$, $10_{52}$, $10_{68}$) est disposée doive rester, pendant un processus de charge prédéfini du système de batterie (100), à une température inférieure à la température dans l'une quelconque des positions dans laquelle est disposée une cellule de batterie lithium-ion pas de référence ($10_{51}$) ; le procédé comportant :

a) la mesure, pour chacune des cellules de batterie lithium-ion de référence (10, $10_{17}$, $10_{52}$, $10_{68}$), un potentiel de référence ($\Delta U$) défini comme le potentiel de l'anode (14, $14_{17}$) de ladite cellule de batterie lithium-ion par rapport à l'électrode de référence (16, $16_{17}$) de ladite cellule de batterie lithium-ion par un moyen de mesure de potentiel (30) ;

b) la génération et la transmission, pour chacune des cellules de batterie lithium-ion de référence (10, $10_{17}$, $10_{52}$, $10_{68}$), d'un signal correspondant au potentiel de référence ($\Delta U$) mesuré à l'étape a) à un moyen de commande ;

c) la réception, par le moyen de commande, des signaux correspondant au potentiel de référence ($\Delta U$) des cellules de batterie lithium-ion de référence (10, $10_{17}$, $10_{52}$, $10_{68}$) générés à l'étape b) ;

d) la réduction, par le moyen de commande, d'un courant de charge ($I_{charge}$) appliqué au système de batterie (100) lors de la réception, depuis le moyen de mesure de potentiel (30) d'au moins une cellule de batterie lithium-ion de référence (10, $10_{17}$, $10_{52}$, $10_{68}$), d'un signal indiquant que le potentiel de référence ($\Delta U$) de ladite cellule de batterie lithium-ion est inférieur à une tension seuil prédéterminée.

**13.** Procédé selon la revendication 12, dans lequel le courant de charge ($I_{charge}$) appliqué au système de batterie (100) est déterminé en fonction d'une température (T) d'au moins l'une des cellules de batterie lithium-ion de référence (10, $10_{17}$, $10_{52}$, $10_{68}$), et/ou dans lequel le courant de charge ($I_{charge}$) appliqué au système de batterie (100) est déterminé en fonction d'un état de charge, SoC, d'au moins l'une des cellules de batterie lithium-ion de référence (10, $10_{17}$, $10_{52}$, $10_{68}$) .

**14.** Procédé selon la revendication 12 ou 13, comportant en outre une étape
e) d'augmentation, par le moyen de commande, du courant de charge ($I_{charge}$) appliqué au système de batterie (100) lors de la réception, depuis le moyen de mesure de potentiel (30) de chacune des cellules de batterie lithium-ion de référence (10, $10_{17}$, $10_{52}$, $10_{68}$), d'un signal indiquant que le potentiel de référence ($\Delta U$) de la cellule de batterie lithium-ion respective dépasse la tension seuil prédéterminée.

**15.** Procédé selon l'une quelconque des revendications 12 à 14, comportant une étape
f) d'ajustement, par le moyen de commande, du courant de charge ($I_{charge}$) appliqué au système de batterie (100) de sorte que le signal correspondant au potentiel de référence ($\Delta U$) d'une des cellules de batterie lithium-ion de référence (10, $10_{17}$, $10_{52}$, $10_{68}$) indique un potentiel de référence ($\Delta U$) égal à la tension seuil prédéterminée, et chacun des signaux correspondant au potentiel de référence ($\Delta U$) de l'une des cellules de batterie lithium-ion de référence restantes indique un potentiel de référence ($\Delta U$) supérieur ou égal à la tension seuil prédéterminée.

FIG. 1

FIG. 2

FIG. 3

**EP 3 965 198 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019280345 A1
- WO 2013006415 A2
- JP 2012049040 A
- US 2006132101 A1